# EUROPEAN PATENT SPECIFICATION

(11) **EP 1 487 653 B1**
(45) Date of publication and mention of the grant of the patent: **15.10.2008**
(21) Application number: 03743344.8
(22) Date of filing: 27.02.2003
(51) Int. Cl.: B60J 10/04, B60J 10/00

(54) **SEALING SYSTEM FOR A MOTOR VEHICLE WINDOW**
DICHTUNGSSYSTEM FÜR EIN KRAFTFAHRZEUGFENSTER
SYSTEME D'ETANCHEITE POUR LA VITRE D'UN VEHICULE AUTOMOBILE

(30) Priority: 05.03.2002 IT TO20020183
(43) Date of publication of application: 22.12.2004
(73) Proprietor: Metzeler Automotive Profile Systems Italy S.p.A., 10073 Cirié (Torino) (IT)
(72) Inventor: ARABINO, Domenico, I-84100 SALERNO (IT)
(74) Representative: Quinterno, Giuseppe
(86) International application number: PCT/EP2003/002014
(87) International publication number: WO 2003/074308

(56) References cited:
- EP-A- 0 715 981
- EP-A- 0 872 369
- WO-A-01/34933
- DE-C- 4 435 297
- US-A- 5 139 305

## Description

The present invention relates in general to systems for fluid-tight sealing of motor vehicle windows.

More specifically, the subject of the invention is a fluid-tight sealing system of the kind defined in the preamble of claim 1.

A sealing system of that kind is disclosed in US-A-5 139 305 for use with a box-like frame of a window of a motor-vehicle, the frame comprising a first and a second lateral wall which extend in opposite directions from an intermediate wall.

A similar system is disclosed in WO-A-01 34 933.

It is an aim of the preset invention to provide an improved fluid-tight sealing system of the above-defined kind.

This and other aims are achieved according to the invention with a system having the features defined in claim 1.

Further characteristics and advantages of the invention will become clear from the following detailed description, provided purely by way of non-limiting example, with reference to the appended drawing, which shows; in cross-section, a portion of a window frame with which is associated a fluid-tight sealing system according to the invention.

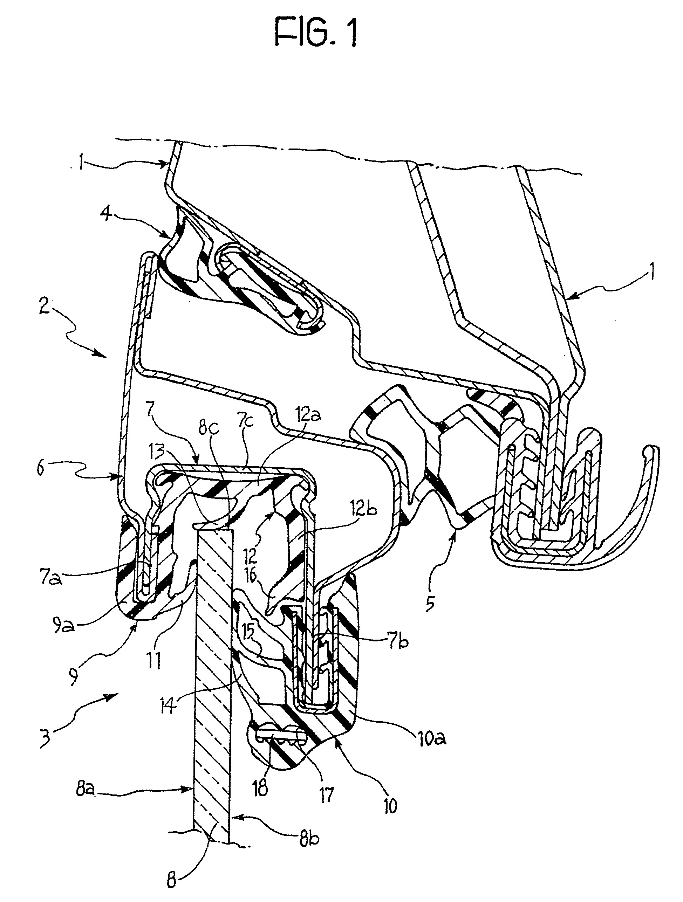

Figure 1 indicates generally by 1 a portion of the bodywork or structure of a motor vehicle, with which is associated a door 2 in which a window indicated as a whole by 3 is provided.

Between the structure 1 and the door 2 are inserted sealing gaskets 4 and 5 of a type which is known per se. Such gaskets in the embodiment illustrated are carried by the structure 1. The gasket 4 is of the type currently defined as an "anti-noise" gasket.

The window 3 provided in the door 2 comprises a frame 6 in which, in a manner known per se, a channel formation indicated as a whole by 7 is provided. Said channel formation fundamentally comprises a pair of lateral walls or flanges 7a and 7b, respectively outer and inner, facing each other and connected to each other by a bottom wall 7c.

The channel formation 7 is conveniently produced with shaped sheet metal members coupled to one another by techniques which are known per se, for example by seaming and/or welding.

The window 3 further comprises a movable window pane 8 of transparent material such as glass or the like. Said window pane is capable, in the closed state of the window, of extending with clearance inside the channel formation 7 of the window frame.

Between the transparent window pane 8 and the channel formation 7 is inserted a sealing system which in the embodiment illustrated comprises a pair of separate and different gaskets, indicated in the drawing by 9 and 10. Said gaskets have respective substantially U-shaped anchorage profiles 9a and 10a, fitted with interference on the outer 7a and respectively inner 7b lateral walls or flanges of the channel formation 7.

From the anchorage profile 9a of the gasket 9 extends a flexible sealing lip 11 facing, in operation, towards the inside of the channel formation 7 and intended to press against the outer surface or face 8a of the transparent window pane 8.

From the anchorage profile 10a of the gasket there likewise extends a wing 12. In the embodiment illustrated the wing 12 comprises a first strip 12a which covers the bottom wall 7c of the channel formation 7, and a second strip 12b, which partially covers the lateral wall of the channel formation 7 facing the outer wall or flange 7a.

From the portion 12a of the wing 12 extends a flexible sealing lip 13 intended to press against the end surface 8c of the window pane 8 when the latter is in the closed state of the window.

From the anchorage profile 10a of the second gasket 10 extends a flexible sealing formation 14, essentially facing towards the inside of the channel formation 7, and arranged to press against the inner surface or face 8b of the window pane 8.

In the exemplary embodiment illustrated, the sealing formation 14 of the gasket 10 is of the substantially tubular type, with an inner longitudinal dividing wall 15. Other embodiments of said formation are, however, possible.

The portion 12b of the gasket 9 conveniently, but not necessarily, has at its free end a small longitudinal lip 16 intended to overlap or be juxtaposed against the adjacent end of the anchorage profile 10a of the gasket 10.

In the terminal portion of the anchorage profile 10a of the gasket 10 a tubular seat or pocket 17 is conveniently produced, defining a transversely elongate passage in which can be disposed (also subsequent to the manufacture of the gasket) a pressure-sensitive member 18 for the implementation of a so-called "anti-pinch" function, for example as described in the earlier Italian Patent Application No. TO2001A000007 in the name of the same Applicant.

The division of the sealing system between the frame 6, 7 and the window pane 8 makes it possible, when put into operation, to cause the gaskets 9 and 10 to slide relative to one another, in order to be more capable of following the course of the corresponding flanges 7a and 7b of the channel formation, in particular avoiding or at least limiting the occurrence of unpleasing imperfections, such as the formation of wrinkles in the corner portions of the window.

Moreover, in the case of damage to one portion of the sealing system, the damaged portion may be replaced more easily.

With the principle of the invention remaining the same, the embodiments and details of production may of course be widely varied with respect to what has been described and illustrated purely by way of non-limiting example, without thereby departing from the scope of the invention as defined in the appended claims.

## Claims

1. A fluid-tight sealing system between a frame (6) of a window (3) of a motor vehicle and a movable window pane (8) for closing the window, wherein the frame (6) comprises a formation (7) with a first and a second, respectively outer and inner, lateral wall or flange (7a, 7b) and an interconnection wall (7c), in which, in use, an edge portion of said window pane (8) is capable of extending with clearance; the system comprising sealing means (9, 10) coupled to the lateral walls or flanges (7a, 7b) of the said formation (7) and which are interposed, in operation, between said formation (7) of the frame (6) and the window pane (8) to produce a fluid-tight seal between them;
said sealing means comprising
a first and a second sealing gasket (9, 10), different from each other, with respective substantially U-shaped anchorage profiles (9a, 10a), able to be applied to the outer (7a) and respectively inner (7b) lateral walls or flanges of said formation (7);
at least one first flexible sealing formation (11), intended to press against the outer surface or face (8a) of said window pane (8), extending from the anchorage profile (9a) of the first gasket (9);
at least one second flexible sealing formation (14), intended to press against the inner surface or face (8b) of said window pane, extending from the anchorage profile (10a) of the second gasket (10);
the system being **characterised in that** it is predisposed for use in a frame (6) comprising a channel-like formation (7) with said lateral walls or flanges (7a, 7b) facing each other, said interconnection wall (7c) being a bottom wall, and **in that** the second gasket (10), adjacent to the course of said window pane (8) in operation, forms a tubular portion or pocket (17) defining a transversely elongate passage, arranged to receive a pressure-sensitive member (18).

2. A system according to claim 1, wherein there further extends from the anchorage profile (9a) of the first gasket (9) a wing (12) arranged to cover the bottom wall (7c) of said channel formation (7), and from which extends a third flexible sealing formation (13) intended to press against the end surface (8c) of the window pane (8).

## Patentansprüche

1. Fluiddichtes Dichtungssystem zwischen einem Rahmen (6) eines Fensters (3) eines Kraftfahrzeugs und einer beweglichen Fensterscheibe (8) zum Schließen des Fensters, wobei der Rahmen (6) eine Anordnung (7) mit einer ersten und einer zweiten bzw. einer äußeren und einer inneren lateralen Wand bzw. Flansch (7a, 7b) und einer Verbindungswand (7c) umfasst, bei denen im Gebrauch ein Randabschnitt der Fensterscheibe (8) fähig ist, sich mit Spielraum auszudehnen; wobei das System Dichtmittel (9, 10) umfasst, die mit den lateralen Wänden oder Flanschen (7a, 7b) der Anordnung (7) verbunden sind und im Betrieb zwischen der Anordnung (7) des Rahmens (6) und der Fensterscheibe (8) eingesetzt sind, um eine fluiddichte Abdichtung zwischen diesen zu bewirken;
wobei die Dichtungsmittel umfassen:
eine erste und eine zweite Dichtung (9, 10), die sich unterscheiden, mit jeweils im Wesentlichen U-förmigen Befestigungsprofilen (9a, 10a), die an die äußeren (7a) bzw. inneren (7b) Seitenwände oder Flansche der Anordnung (7) angelegt werden können;
wenigstens eine erste flexible Dichtungsanordnung (11), die dazu bestimmt ist, gegen die Außenfläche oder Außenoberfläche (8a) der Fensterscheibe (8) zu drücken, und sich ausgehend vom Befestigungsprofil (9a) der ersten Dichtung (9) erstreckt;
wenigstens eine zweite flexible Dichtungsanordnung (14), die dazu bestimmt ist, gegen die Innenfläche oder Innenoberfläche (8b) der Fensterscheibe zu drücken, und sich ausgehend vom Befestigungsprofil (10a) der zweiten Dichtung (10) erstreckt;
wobei das System **dadurch gekennzeichnet ist, dass** es für die Verwendung in einem Rahmen (6) bestimmt ist, der eine kanalartige Anordnung (7) mit lateralen Wänden oder Flanschen (7a, 7b) umfasst, die einander zugewandt sind, wobei die Zwischenwand (7c) eine Bodenwand ist, und **dadurch**, dass die zweite Dichtung (10), die im Betrieb dem Verlauf der Fensterscheibe (8) folgt, einen rohrförmigen Abschnitt oder eine Tasche (17) bildet, die einen transversal langgestreckten Durchgang definiert, der so angeordnet ist, dass er ein druckempfindliches Element (18) aufnimmt.

2. System nach Anspruch 1, wobei sich ferner ausgehend vom Befestigungsprofil (9a) der ersten Dichtung (9) ein Flügel (12) erstreckt, der so angeordnet ist, dass er die Bodenwand (7c) der Kanalanordnung (7) bedeckt, wobei sich von diesem eine dritte flexible Dichtungsanordnung (13) erstreckt, die dazu bestimmt ist, gegen die Stirnfläche (8c) der Fensterscheibe (8) zu drücken.

## Revendications

1. Système d'étanchéité étanche au fluide entre un cadre (6) d'une fenêtre (3) d'un véhicule à moteur et une vitre mobile (8) destinée à fermer la fenêtre, le cadre (6) comportant une formation (7) avec un premier et un deuxième, respectivement extérieur et intérieur, rebord ou paroi latérale (7a, 7b) et une paroi d'interconnexion (7c), dans laquelle, lors de l'utilisation, une partie de bord de ladite vitre (8) est capable de s'étendre avec du jeu ; le système comportant des moyens d'étanchéité (9, 10) reliés aux rebords ou parois latérales (7a, 7b) de ladite formation (7) et qui sont interposés, en fonctionnement, entre ladite formation (7) du cadre (6) et la vitre (8) de façon à produire un joint étanche au fluide entre eux ;
lesdits moyens d'étanchéité comportant
une première et une deuxième garniture d'étanchéité (9, 10), différente l'une de l'autre, avec des profils d'ancrage respectifs sensiblement en forme de U (9a, 10a), capables d'être appliquées sur les parois latérales ou rebords respectivement extérieur (7a) et intérieur (7b) de ladite formation (7) ;
au moins une première formation d'étanchéité flexible (11), prévue pour appuyer contre la surface ou la face extérieure (8a) de ladite vitre (8), s'étendant depuis le profil d'ancrage (9a) de la première garniture (9) ;
au moins une deuxième formation flexible (14), prévue pour appuyer contre la surface ou la face intérieure (8b) de ladite vitre, s'étendant depuis le profil d'ancrage (10a) de la deuxième garniture (10) ;
le système étant **caractérisé en ce qu'**il est prédisposé pour une utilisation dans un cadre (6) comportant une formation en forme de canal (7) avec lesdits rebords ou parois latérales (7a, 7b) l'un en face de l'autre, ladite paroi d'interconnexion (7c) étant une paroi inférieure, et **en ce que** la deuxième garniture (10), adjacente au déplacement de ladite vitre (8) en fonctionnement, forme une partie tubulaire ou poche (17) définissant un passage transversalement allongé, prévu pour recevoir un élément sensible à la pression (18).

2. Système selon la revendication 1, dans lequel s'étend en outre depuis le profil d'ancrage (9a) de la première garniture (9) une aile (12) prévue pour recouvrir la paroi inférieure (7c) de ladite formation de canal (7), et depuis laquelle s'étend une troisième formation d'étanchéité flexible (13) prévue pour appuyer contre la surface d'extrémité (8c) de la vitre (8).
